(19)

**Europäisches Patentamt**
**European Patent Office**
**Office européen des brevets**

(11)  **EP 4 527 501 A1**

(12)  **EUROPEAN PATENT APPLICATION**

(43) Date of publication:
**26.03.2025  Bulletin 2025/13**

(21) Application number: **24201803.4**

(22) Date of filing: **20.09.2024**

(51) International Patent Classification (IPC):
**B01L 3/00** *(2006.01)*       **G01N 15/14** *(2024.01)*
**G01N 15/1434** *(2024.01)*

(52) Cooperative Patent Classification (CPC):
**B01L 3/502784; G01N 15/1425; G01N 15/1436;**
B01L 2200/143; B01L 2200/146; B01L 2300/023;
B01L 2300/0627; B01L 2300/14; G01N 2015/1493

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **20.09.2023   EE 202300024**

(71) Applicant: **Tallinn University of Technology**
**19086 Tallinn (EE)**

(72) Inventors:
 • **Gyimah, Nafisat**
  **19086 Tallinn (EE)**

 • **Ashraf, Kanwal**
  **19086 Tallinn (EE)**
 • **Pärnamets, Kaiser**
  **19086 Tallinn (EE)**
 • **Jõemaa, Rauno**
  **19086 Tallinn (EE)**
 • **Pardy, Tamas**
  **19086 Tallinn (EE)**

(74) Representative: **Koppel, Mart Enn**
**KOPPEL Patendibüroo OÜ**
**Kajaka 4-10**
**13418 Tallinn (EE)**

(54)  **INTEGRATED MODULAR SYSTEM FOR AUTOMATED GENERATION OF DROPLETS IN MICROFLUIDIC APPLICATIONS AND METHOD THERETO**

(57)   an integrated, modular system for automated aqueous droplet generation with high monodispersity. The system includes dynamic feedback control of droplet size and input pressure. Input pressure is generated by two piezoelectric micropumps. Droplet sizes are determined via light intensity measurement in an LED-photodiode setup. The system includes a wireless communication and has a low enough power consumption for battery-powered operation.

FIG 9

EP 4 527 501 A1

## Description

TECHNICAL FIELD

The invention relates to systems for generation of droplets, such as for automated generation of droplets in microfluidic applications.

BACKGROUND ART

Droplet microfluidics enables studying large cell populations in chemical isolation, at a single cell resolution. Applications include studying cellular response to drugs, cell-to-cell interaction studies. Such applications need a reliable and repeatable droplet generation with high monodispersity. Most systems used in research rely on manual tuning of flow parameters on off-the-shelf instruments. Setups are highly customized, limiting reproduction of experimental results.

Droplet microfluidics enables studying the response of cell populations to specific chemicals, in isolation, at a very high throughput. Chemical isolation is given by encapsulating cells into aqueous droplets in an immiscible carrier medium, together with the chemicals for their treatment. For example, antibiotics and resistant bacteria, to screen for antimicrobial susceptibility, or circulating multi-drug resistant tumor cells and chemotherapy drugs to screen for drug response among other analysis targets. Working in droplets enables 1) higher throughput than conventional batch processing in 2) a compact, highly integrated, automatic system as well as 3) continued work with individual droplets downstream [4]. Furthermore, it enables analysis of single-cells, or cell-to-cell interactions. Droplet microfluidics has additional applications in chemical analysis and synthesis, as well as bioanalyses other than cytometry (e.g., nucleic acids).

However, imaging droplet flow cytometry necessitates reliable and repeatable droplet generation with high droplet monodispersity (1-5%) at moderate droplet generation rates (~1-3 kHz). To date, open-loop control and/or manual tuning of flow parameters to achieve desired droplet sizes and stable droplet generation are most common. However, the target parameters are difficult to achieve and maintain with manual tuning. Thus, automated droplet generation with closed-loop control (or in other words, an inline quality control system of droplet generation) is necessary. Fu et al demonstrated a reduction of steady-state error to <2% coefficient of variation (CV) across various flow conditions in droplet digital PCR applications. Similarly, Duan et al achieved high monodispersity (<7.6 CV%) by implementing a closed-loop control strategy, which was at least 90% lower than with open-loop control. Additionally, Zen et al addressed the challenge of predicting droplet size by using closed-loop control to account for the nonlinearity of flow-focusing. Moreover, a novel microfluidic system was developed to optimize cell processing conditions using deep learning algorithms for analyzing sensor data and closed-loop control to update a pressure pump and maintain optimal cell flow speed. Several other works have demonstrated closed-loop control of droplet sizes by tuning flow parameters based on an image/video stream of the flowing droplets. Most demonstrated systems (TABLE I) used droplet imaging for control. However, overall throughput in camera-based tracking is limited by the imaging throughput of the camera (increasing throughput increases cost and heat dissipation). The price/performance ratio of imaging droplets for flow control (in contrast with cell imaging, which is a different application) is also not optimal.

A compact system with a laser-photodiode setup for bubble tracking was demonstrated. Such an integrated, compact benchtop setup enables portability between labs, which in turn enables transferring experimental workflows with excellent repeatability. It also allows replication of results, thus enabling virtual parallel labs and digital, rather than physical exchange of results and knowledge. However, at present, widely used setups are an ensemble of off-the-shelf instruments, assembled specifically for the experiment on hand, with little to no integration. The lack of integration means the setup (and results created with it) cannot be easily transferred between labs. It is also notable that while in microfluidics in general, syringe pumps are the most popular choice due to their flow stability, affordability, and ease of use, in droplet microfluidics, pressure pumps are also very common, as they do not need refilling. The need to refill the syringe causes interruptions in experimental workflows, and possibly also the need to recalibrate flow parameters. Finally, in our earlier reviews, we found a pronounced interest towards low-cost instrumentation and the democratization of instruments for droplet microfluidics.

Compact, integrated droplet microfluidics instruments, particularly with wireless communication and low-cost hardware, are uncommon.

DISCLOSURE OF INVENTION

Proposed is an integrated, modular system for automated aqueous droplet generation with high monodispersity. The system includes dynamic feedback control of droplet size and input pressure. Input pressure is generated by two piezoelectric micropumps. Droplet sizes are determined via light intensity measurement in an LED-photodiode setup. The system includes a wireless communication and has a low enough power consumption for battery-powered operation.

During module-level evaluations, aqueous droplets were generated in a light mineral oil + Span 80 surfactant carrier medium, using 3 different flow-focusing junction geometries.

The device has a significantly faster pressure stabilization time (10 s) compared to a syringe pump-based reference setup (120 s). During system-level evaluation, deionized water droplets were generated in a carrier medium of HFE7500 + PEG-PFPE triblock surfactant. Resultant droplet sizes were benchmarked with microscopy. The system was able to repeatedly generate mono- and polydisperse droplets on demand, with CVs between 5-10% in the ~50-200 $\mu$m droplet diameter range.

BRIEF DESCRIPTION OF DRAWINGS

Embodiments of the present invention will now be described, by way of example, with reference to the accompanying drawings in which:

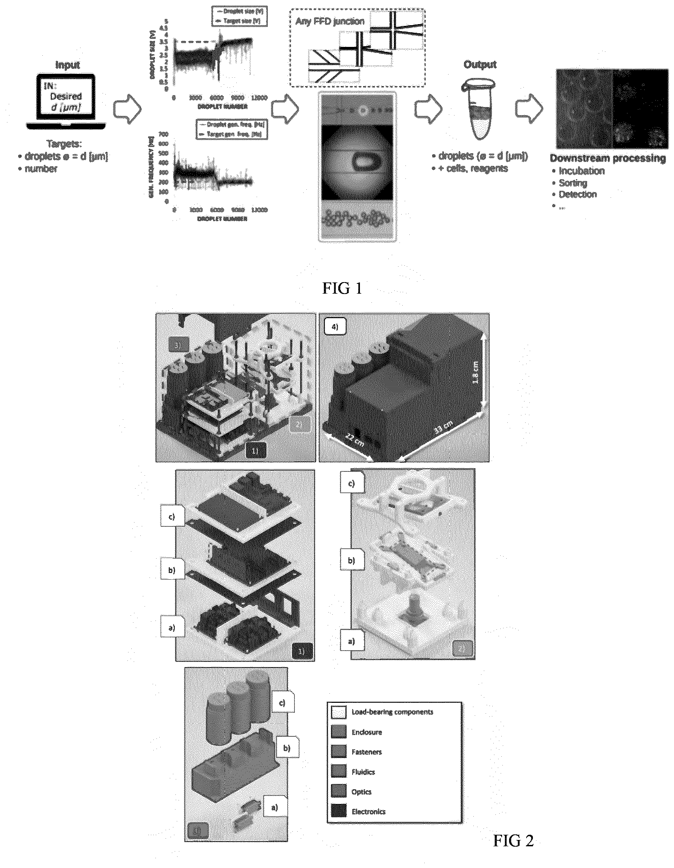

Fig 1 illustrates the concept of the invention

Fig 2 is the prototype assembly, including electronics module (Fig 2(1)) consisting of the power supply stage Fig2(1)(a), the pump driver and pressure sensor stage Fig 2(1)(b) and the RPi4B and the ADC and filtering circuit for the optical sensor Fig 2(1)(c), plus the corresponding copper shielding plates. Fig 2(2) The sensorics module, consisting of the base stage with the photodiode and lens Fig 2(2)(a), the microfluidic chip mount stage Fig 2(2)(b) and the light source mount stage Fig 2(2)(c). Fig 2(3) is a fluidics module, which included L-mounts for the pumps Fig 2(3)(a) and a foam-padded enclosure Fig 2(3)(b), as well as Fig 2(3)(c) sample, reagent, and product collection containers. Fig 2(4) is the enclosure with 3D printed internal and external walls, as well as a wooden base plate to which all modules were mounted for stability. The M5 bolts mounting the stages of the modules are hidden in the close-up explosion views (1-3).

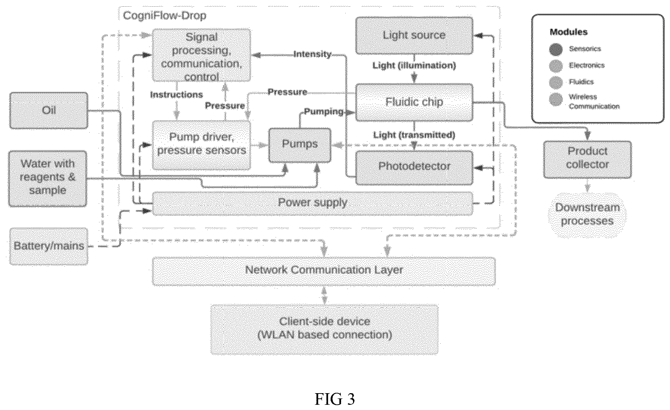

Fig 3 is the principal scheme of the invention

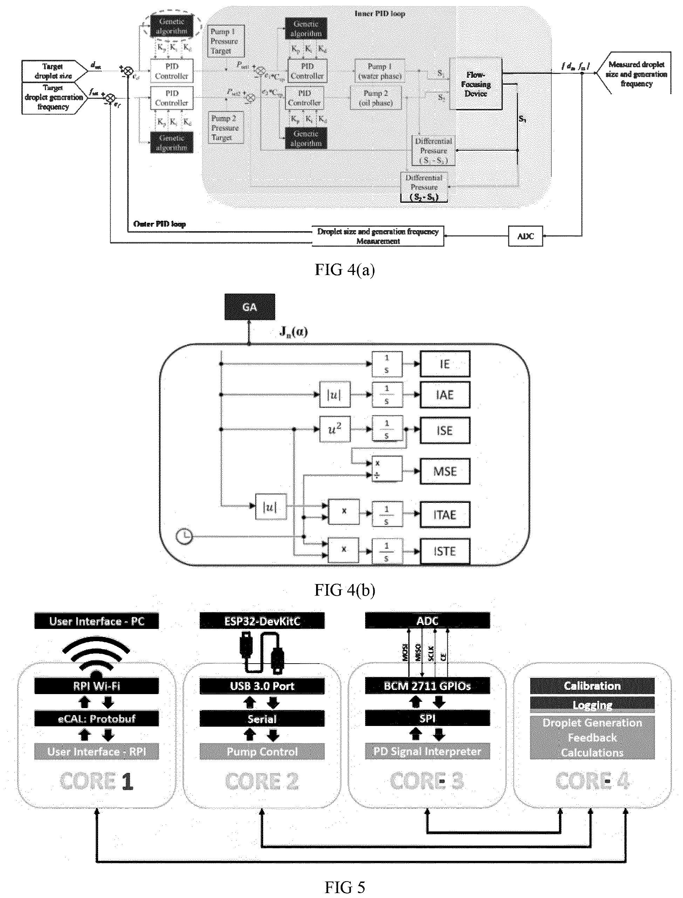

Fig 4(a) is a structure of a dual-loop PID strategy and Fig 4(b) illustrates a tuning method with six objective function criteria obtained from genetic algorithm.

Fig 5 displays a distribution of tasks between four cores of the system controller

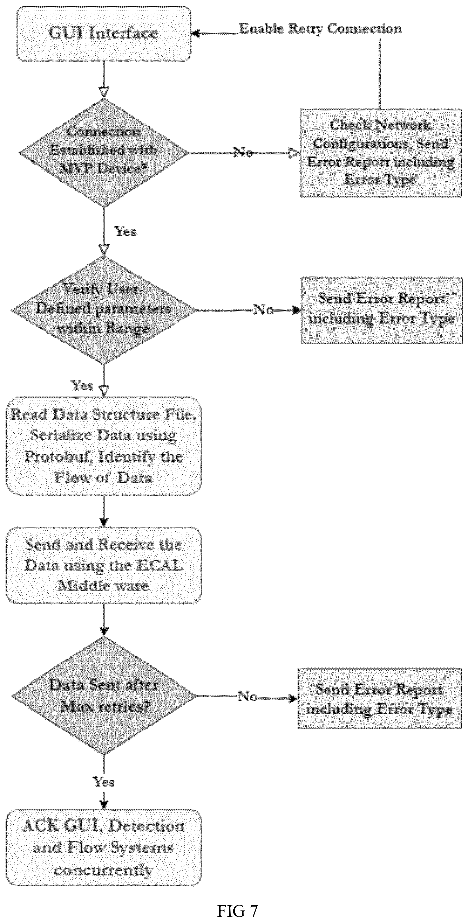

Fig 7 is an implementation of the communication interface, data transmission, reception, verification and GUI for accessibility.

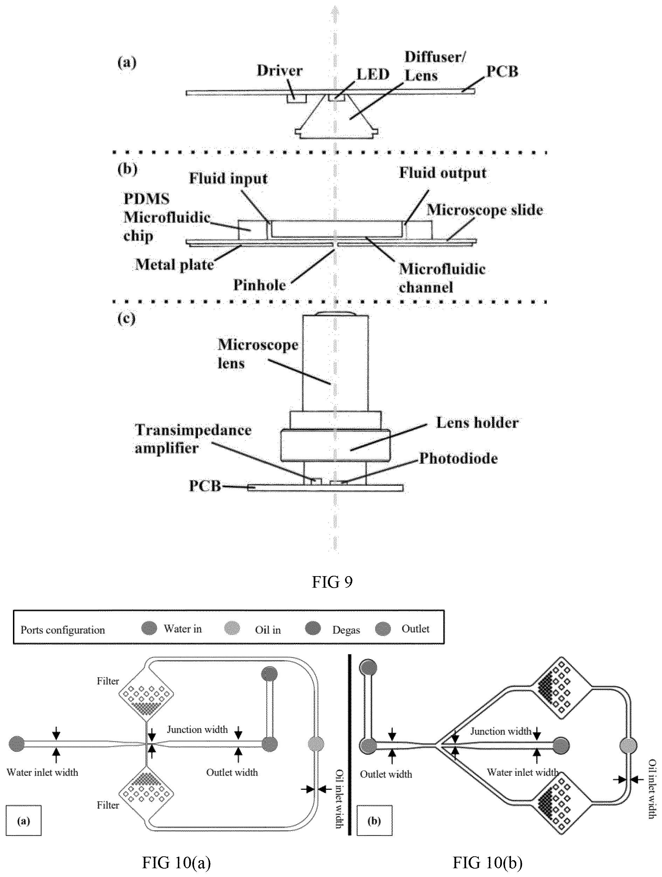

Fig 9 is a cross-section of the optical sensor system according to the invention.

Fig 10 is a principal scheme of controlled droplet generation;

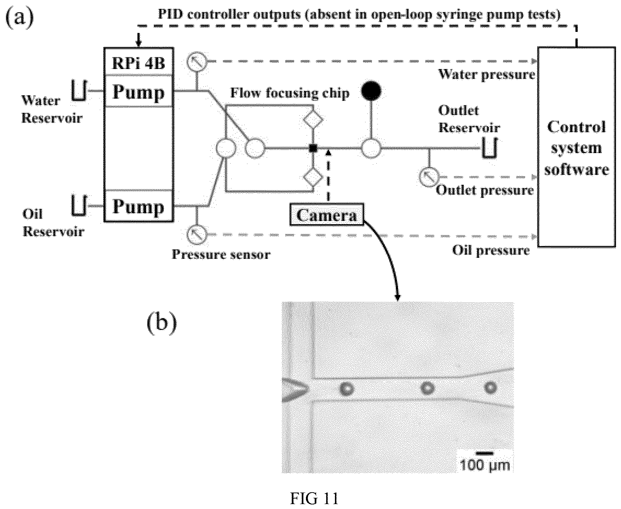

Fig 11 is a schematic diagram for the experimental setup of droplet microfluidics system: (a) block diagram of the control system, (b) camera image of the droplet generator junction

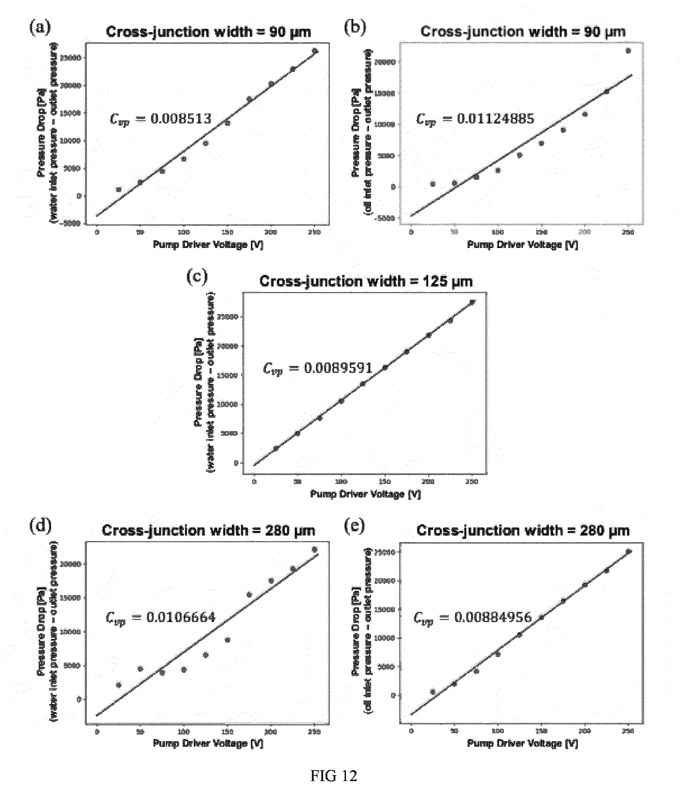

Fig 12 shows pressure drops vs. peak-to-peak voltages of the piezoelectric micropump for the chip variants with cross-junction widths: 90 $\mu$m with DIW (a) and with oil A (b); 125 $\mu$m with DIW (c); and 280 $\mu$m with DIW (d) and with oil A (e). Driving frequency for water pump was 200 Hz sinewave. The driving voltage waveform was 200 Hz sinewave for the water pump and 50 Hz sinewave for the oil pump.

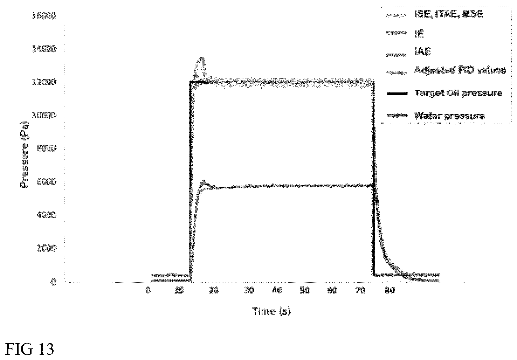

Fig 13 is a simulation results for pressure feedback PID controller tuning with a genetic algorithm for oil pressure Control.

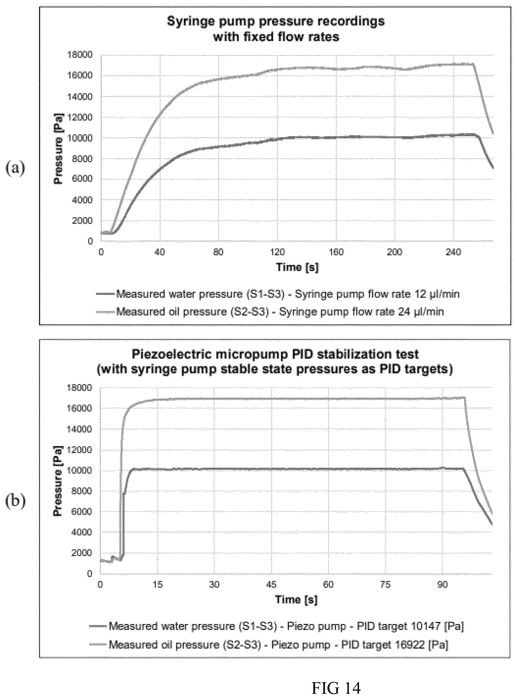

Fig 14 shows data of pressure stabilization experiments performed on the setup shown in Fig. 1 1(a). Syringe pumps were set to pump with 12 $\mu$l/min for DIW and 24 $\mu$l/min for oil A. One minute period from the end of stable state pressures on (a) were averaged and used as pressure targets for the piezoelectric micropump PIDs. a) Responsiveness of flow-rate driven system (with third-party syringe pumps); b) Responsiveness of our pressure-driven system

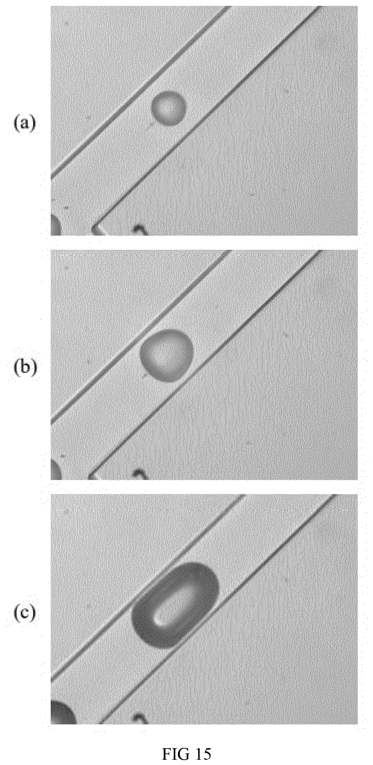

Fig 15 are recorded camera images of droplets generated with DIW and oil A in a 125 $\mu$m wide microfluidic channel taken at 555 frames per second under brightfield LED. a) ~58.4 $\mu$m length droplet, generated with 5.2 kPa and 11.0 kPa for water and oil pressures respectively; b) ~112.7 $\mu$m length droplet, generated with 5.2 kPa and 9.5 kPa for DI water and oil A pressures respectively; c) ~182.0 $\mu$m length droplet, generated with 5.2 kPa and 7.5 kPa for water and oil pressures respectively.

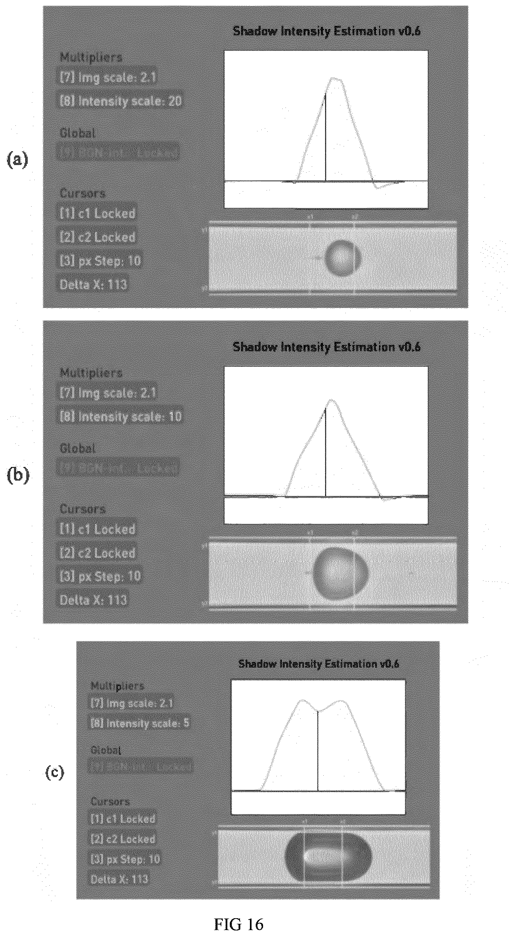

Fig 16 are rotated and cropped camera images shown in Fig. 15, respectively, were scanned with a fixed size moving window, indicated by green vertical lines to obtain corresponding intensity graphs (blue waveform above droplet image). a) low-distortion triangular waveform produced by the ~58.4 $\mu$m length droplet with a relative intensity multiplier of 20_0; b) low-distortion triangular waveform produced by the ~112.7 $\mu$m length droplet with a relative intensity multiplier of 10.0; c) high-distortion trapezoidal (double-peak) waveform produced by the ~182.0 $\mu$m length droplet with a relative intensity multiplier of 5.0.

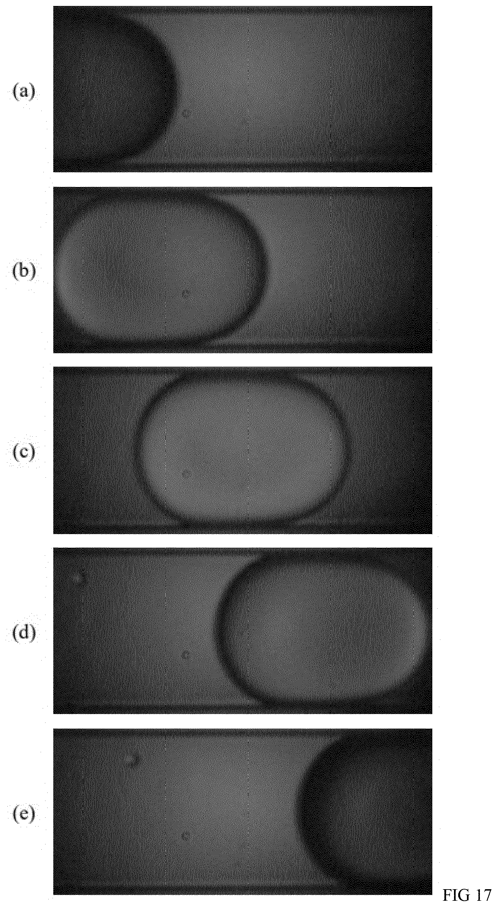

Fig 17 are cropped recorded frames of a passing droplet during generation with oil B. Droplet was generated at 5.0 kPa and 5.5 kPa water and oil pressures respectively. Displayed droplet measures ~171.9 $\mu$m in length and was recorded at 1810 frames per second. A circular ~190 $\mu$m diameter pinhole was used under the microfluidic chip below the recorded region to improve the visibility of the droplet. a) reference frame 1 in series, droplet entering the pinhole aperture; b) reference frame 2 in series, droplet approaching the center of the pinhole aperture; c) reference frame 3 in series, droplet in the middle of the pinhole aperture; d) reference frame 4 in series, droplet leaving from the center of the pinhole aperture; e) reference frame 5 in series, droplet exiting the pinhole aperture.

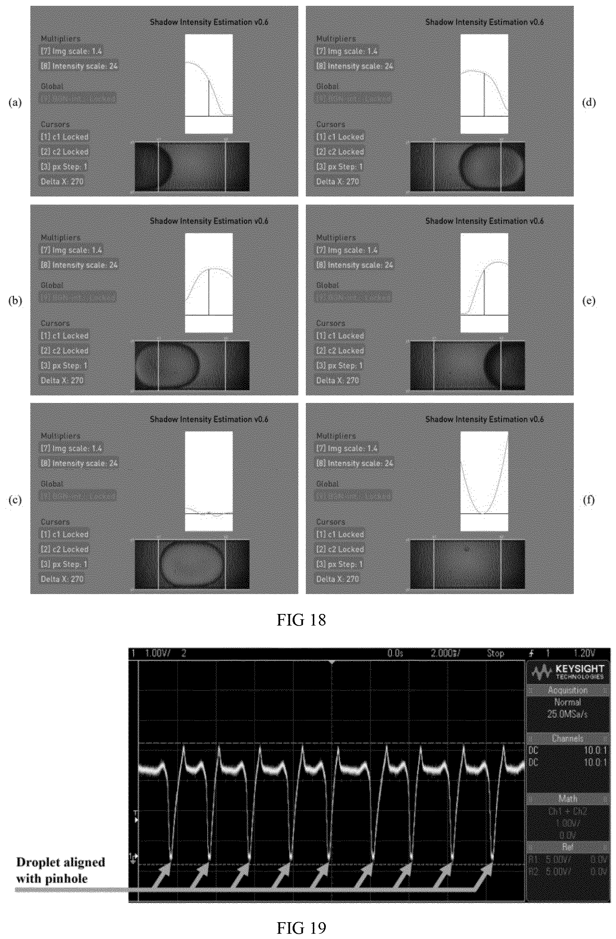

Fig 18 are camera images shown in Fig. 17, respectively, and an extra 6th frame were scanned with a fixed size moving window, indicated by green vertical lines to obtain corresponding intensity graphs (blue waveform above droplet image). All intensity graph scaling multipliers were kept at 245.0 for better visualization and comparability. The intensity of the 6th frame, representing the background noise, was recorded first, and locked into memory. Background intensity was subtracted from the following calculations. a) Indicating a rising shadow intensity as the darkest region of the droplet entered the pinhole aperture and the moving window; b) indicating a past-peak shadow intensity as the droplet moved closer to the center of the pinhole aperture and the moving window; c) indicating the lowest shadow intensity while the droplet was positioned at the center of the pinhole aperture; d) indicating an approaching-peak shadow intensity as the droplet was leaving the central region of the pinhole aperture and the moving window; e) indicating a falling shadow intensity as the darkest region of the droplet was exiting the pinhole aperture and the moving window; f) indicating the intensities of the shadows at the edges of the frame, caused by the pinhole

Fig 19 is an oscilloscope screen capture of recorded amplified, inverted photodiode voltage during droplet generation with chip variant C, at a rate of ~500 Hz. Droplet alignment with the pinhole noted with blue arrows (at the "troughs"). Instability in the droplet production rate is recognizable by the varying time gaps between the "troughs".

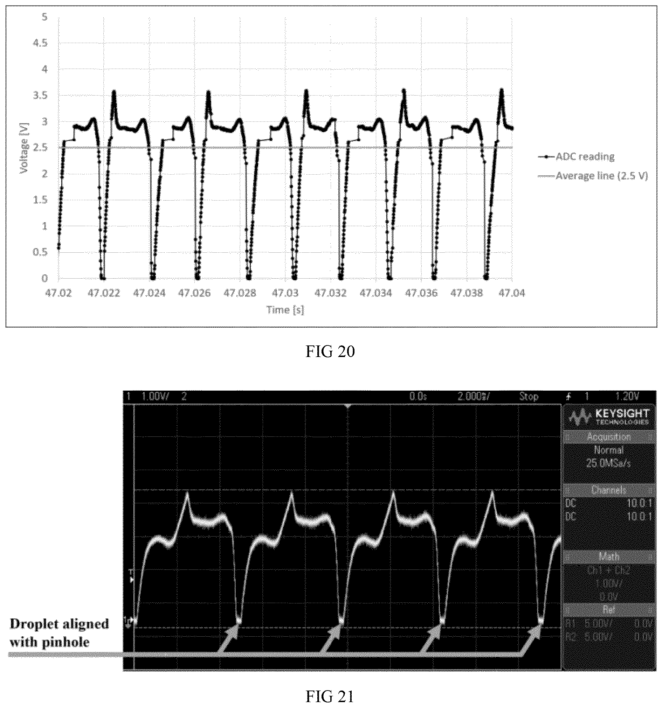

Fig 20 is a sample frame from ADC measurement log on RPI showing ADC readings and the average line over which droplet detection was handled. Shown graph links with Fig. 19, however, with every other peak cut off due to specific cross-core communication function delays.

Fig 21 an oscilloscope screen capture of recorded amplified, inverted photodiode voltage during droplet generation at a rate of ~200 Hz. Droplet alignment with the pinhole noted with blue arrows (at the "troughs").

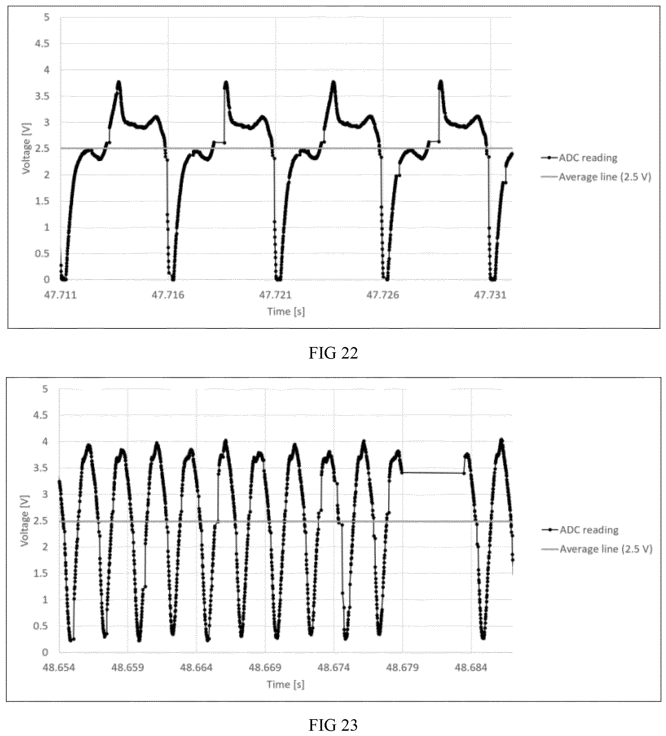

Fig 22 is a sample frame from ADC measurement log on RPI showing ADC readings and the average line over which droplet detection was handled. Shown graph links with Fig. 21, however, in contrast to Fig. 20, cross-core function delays caused after every other detected droplet, were not long enough to cut off the relevant peaks of the droplet waveform.

Fig 23 is a sample frame from ADC measurement log on RPI showing ADC readings and the average line over which droplet detection is handled. In shown example, spontaneous latency delays caused by the operating system running on RPI prevented three consecutive droplets being captured and measured

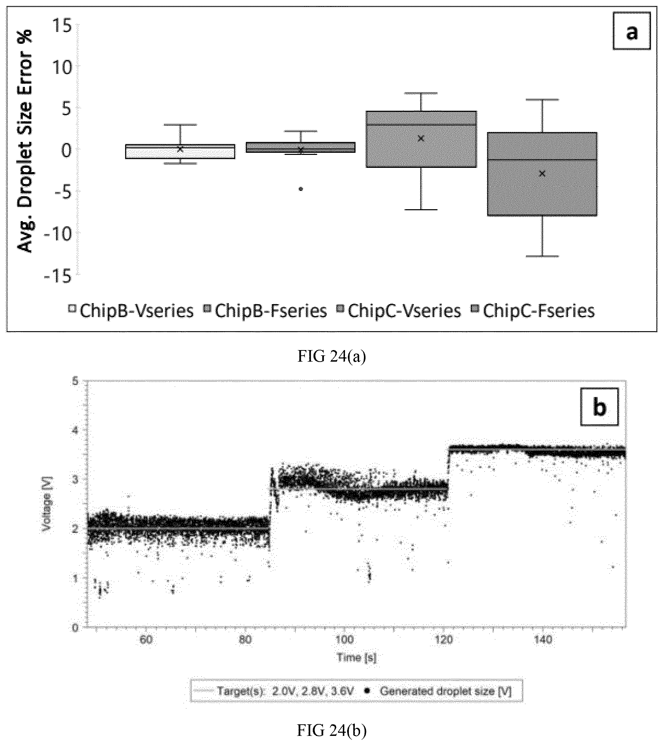

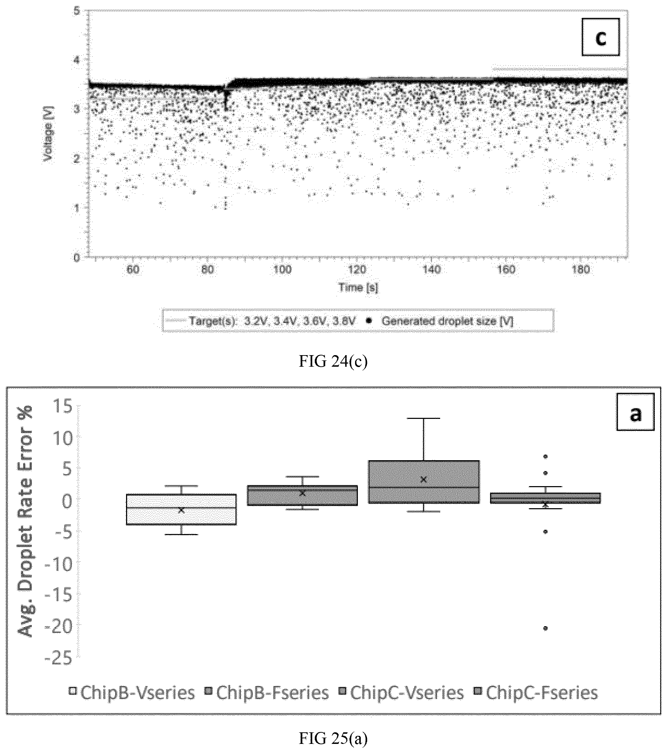

Fig 24 are the results of evaluation tests, where (a) is an averaged droplet size target errors for chips B and C, further split by size and frequency series test sets. Sample sizes for series respectively [12, 12, 9, 16]; (b) is droplet size control dataset of row 1 from TABLE IV, from ChipB-Vseries test set. Graph indicating higher accuracy of stabilization around target voltage levels; (c) is droplet size control dataset of row 2 from TABLE VI, from ChipC-Vseries test set. Graph indicating lower accuracy of stabilization around target voltage levels, preference to droplet size (influenced by chip geometry).

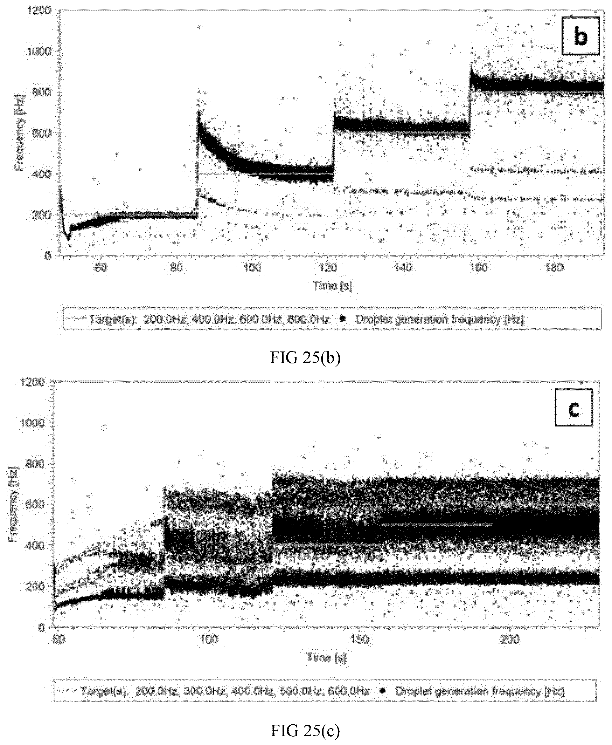

Fig 25 are further results of evaluation tests, where (a) is an averaged droplet rate target errors for chips B and C, further split by size and frequency series test sets. Sample sizes for series respectively [12, 12, 9, 16]; (b) is a droplet generation rate control dataset of row 2 from TABLE V, from ChipB-Fseries test set. Graph indicating higher accuracy of stabilization around target frequency levels; (c) is a droplet generation rate control dataset of row 1 from TABLE VII, from ChipC-Fseries test set. Graph indicating lower accuracy of stabilization around target frequency levels and significant fluctuation in periodicity of droplet production

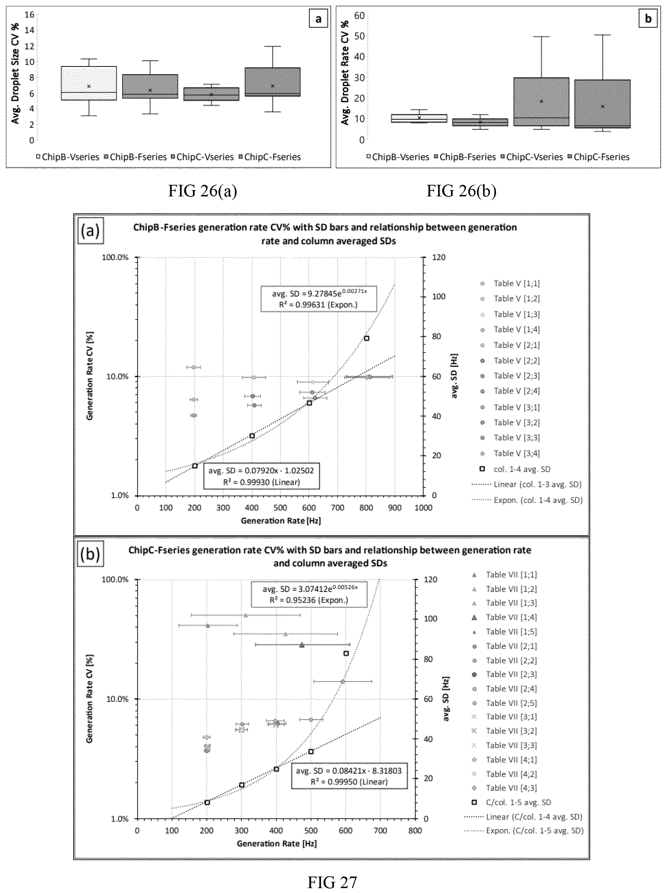

Fig 26 are further results from evaluation tests, where (a) is an averaged droplet size CVs for chips B and C, further split by size (V series) and frequency (F series) series test sets; (b) is an averaged droplet generation rate CVs for chips B and C, further split by size (V series) and frequency (F series) series test sets. Sample sizes for series respectively [12, 12, 9, 16]

Fig 27 are further results of quantitative analysis of F series data, where (a) is a droplet generation rate CV%, from droplet size and rate combinations in TABLE V, plotted against averaged generation rate, calculated over the stabilized generation period. TABLE V column (col.) averaged SDs (from target rate columns 1 to 4 and target size rows 1 to 3) plotted against column target generation rates together with a corresponding exponential regression line. Col. avg. SDs were cropped to columns 1 to 3 to highlight the highly linear correlation region; b) Droplet generation rate CV%, from droplet size and rate combinations in TABLE VII, plotted against averaged generation rate, calculated over the stabilized generation period. TABLE VII column conditionally (C/col.) averaged SDs (from target rate columns 1 to 5 and target size rows 2 to 4 - row 1 conditionally excluded due to indicating a different mode of operation, see ESI S4 for details) plotted against column target generation rates together with a corresponding exponential regression line. C/col. avg. SDs were cropped to columns 1 to 4 to highlight the highly linear correlation region.

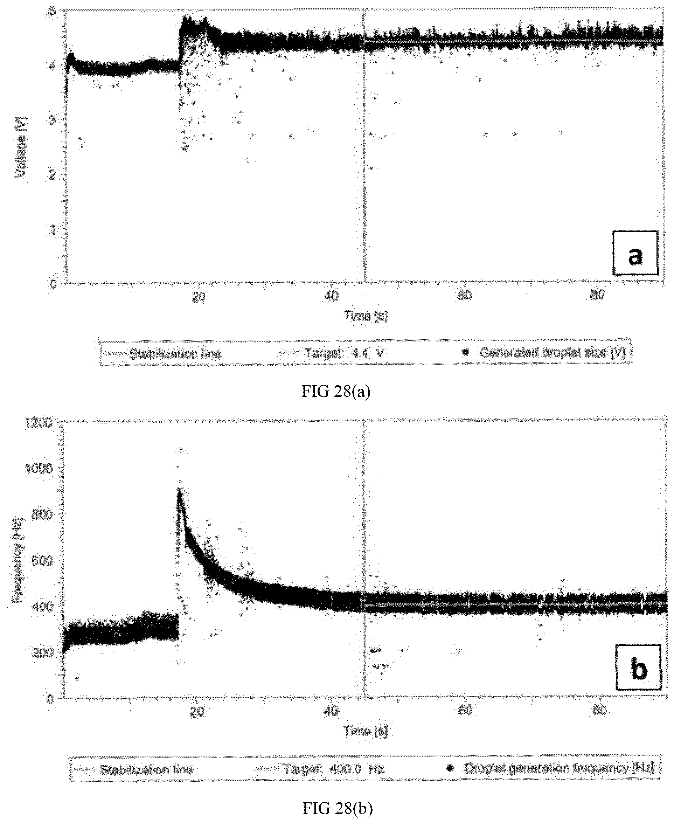

Fig 28 are results of evaluation tests, wherein (a) is a droplet size target data set from a combination of [4.4 V; 400 Hz] with chip B. Stabilization period 45 seconds which includes an initial 15 seconds of default initiation period.

Stabilization and stable segments are separated by blue vertical line. Target size in voltage is shown with an overlayed horizontal line; and (b) is a droplet generation rate target data set from a combination of [4.4 V; 400 Hz] with chip B. Stabilization period 45 seconds which includes an initial 15 seconds of default initiation period. Stabilization and stable segments are separated by blue vertical line. Target size in voltage is shown with an overlayed horizontal line.

Fig 29 shows a droplet cross-sectional size spread from a droplet generation sample, generated with fixed water and oil pressure of 9 kPa and 12 kPa respectively. 6429 droplets measured over 11 images with ImageJ software.

Fig 30 shows droplets generated with chip design B with fixed water and oil pressures of 9 kPa and 12 kPa respectively, pumped using pressure-based piezoelectric micropumps, viewed under microscope (4x/0.16 lens).

## EXAMPLES FOR CARRYING OUT THE INVENTION

Described is an experimental setup, its underlying methodology, and the evaluation of its performance in droplet generation experiments.

TABLE I Background art compared to the invention

| Reference | Flow actuation | Flow control algorithm | Continuous phase fluid | Discrete phase fluid | Monodispersity (CV%) | Flow sensor | Integrated & standalone? | Communication |
|---|---|---|---|---|---|---|---|---|
| [14] | Programmable pressure pump | PID controller | Silicone oil | Calcium chloride solution | <7.6% | N/A | No | USB |
| [13] | Pressure pump | PI controller | Silicone oil | Water | 2% | Pressure sensor | | |
| [18] | Pressure pump | PID controller | Fluorinated oil | Water | 0.32% | N/A | | |
| [15] | Pressure pump | PID controller | Silicone oil | Water | N/A | N/A | | |
| [36] | Microvalves | PI controller | Silicone oil | Water | No steady state errors | N/A | | |
| [37] | Syringe pump, and gas regulator | PI controller | BSA in NaCl | Nitrogen | N/A | N/A | | |
| [38] | Syringe pump | PID controller | Paraffin + 10% Span80, | Water | RMSE reduces from 3.4 to 0.48 | N/A | | |
| [39] | Pressure pump | Pi controller | Silicone oil | Water | N/A | Pressure sensor | | |
| [20] | Gas-driven | Dual-PID (pressure, bubble size) control | Water + Tween80 | $C_4F_{10}/CO_2$ gas | N/A | Laser-photodiode | **Yes** | |
| **Our work** | **Dual piezo pumps** | **Dual -PID (pressure, droplet size/gen. rate) control** | **HFE7500/ mineral oil + tri-block surfactant** | **Water** | **5-10%** | **LED-photodiode** | **Yes** | **WLAN** |

The system as shown on Fig. 1 offers the following advantages over the state of the art (TABLE I).

It is integrated and modular; the modules can be swapped for easy upgrades, improving reliability, and enabling portability. The results and workflows are transferable between labs (enabling creation of virtual parallel labs).

It is low-cost (~650€) compared to commonly used experimental setups built from off-the-shelf components. Modularity allows customization, affordability allows wider collaboration with the platform.

It offers comparable or better performance compared to commonly used droplet generation setups thanks to dual-PID control of droplet size and generation frequency. It reduces carrier/sample/reagent waste. Through automation, it has better repeatability without manual recalibration or in-depth knowledge of the technology.

It measures droplet generation in real-time via intensity change in a simple LED-photodiode setup (water droplets, passing between, causing a change compared to the carrier medium).

Tilting mounts allow reliably set up chip, light source, and detector alignment, optimizing channel/droplet visibility in given microfluidic chip, and increasing reproducibility of results.

Wireless communication enables remote control and monitoring of the system.

It has a sufficiently low power consumption (~8.0 W) that it can be powered from batteries for portable operation (based on the estimated consumption, >4.5h battery life on a 10000 mAh Li-ion power bank).

The system (Fig. 4) was constructed as a compact, modular assembly with an emphasis on ease of use and low hardware cost. The system comprises three main modules (see also block diagram in Fig. 3):

1) Electronics module (Fig. 1): functionally responsible for communication, instrument control and signal processing. Physically was constructed as a stack of stages onto which electronic parts were mounted:

a) Power supply unit (PSU) stage (Fig. 2/1/a): mounted the RJ45 adapter, the power switch, the mains connector, and the PSUs (ECS45US05, XP Power).

b) Pump controller and pressure sensor stage (Fig. 2/1/b): mounted the pump controller interface (with the low-level pump controller running on an ESP32 DevKitC board) and pressure regulation board. The stage was shielded from noise from above and below by copper plates attached to and grounded through structural conductive threaded rods.

c) Communication, control, and signal processing stage (Fig. 2/1/c): mounted the Raspberry Pi 4B (RPI), responsible for system control and communication, and the filter-amplifier, analog-to-digital conversion (ADC) board for the optical sensor.

2) Sensorics module (Section II-C and Fig. 2/2): functionally responsible for optical flow rate measurement. Physically also holds the microfluidic droplet generator chip and consists of the following stack of stages:

a) Photodetector stage (Fig. 2/2/a): the photodetector PCB and the connecting microscope lens were mounted to the bottom plate.

b) Chip mount stage (Fig. 2/2/b): included the chip mount with 3 degrees of freedom (DoF; height, roll, pitch) and a removable microfluidic chip holder.

c) Light source mount stage (Fig. 2/2/c): positioned at the top of the sensorics module was an analogous 3 DoF mount stage for the light source as was for the chip mount stage. The light source was an LED, soldered to a 25mm x 75 mm sized PCB. A diffuser/lens was attached over the LED. Aluminum or large copper area on the PCB was used for heat dissipation from the LED.

3) Fluidics module (Fig. 2/3, Fig. 2/1/b, Fig. 2/2/b): functionally responsible for generating droplets from the carrier medium, reagents, and sample(s). Additionally responsible for dampening secondary vibration and sound produced by piezoelectric micropumps.

a) Pump mount (Fig. 2/3/a): both pumps were mounted on an L-shaped mount. The pumps were fastened to the mount with shock dampening rubber in between.

b) Shock- and audibility-dampening piezopump enclosure (Fig. 2/3/b): 2-part enclosure with rubber padding fitted around the micropumps for additional sound absorption. The top of the enclosure was designed with slots for three 100 ml lab bottles.

c) Liquid containers (Fig. 2/3/c): included the reagent and sample containers, as well as the product collector.

d) Pressure sensors (mounted to electronics module Fig. 2/1/b)

e) Fluidic chip (mounted to sensorics module Fig. 2/2/b)

4) Enclosure (Fig. 2/4): held the components together, including the interior walls between compartments, as well as the external enclosure. The base plate was a wooden board of 22 cm x 33 cm x 1.8 cm, selected to provide mechanical support to the assembly. Internal walls were used to route cables and tubing, as well as providing slots for T-junctions that bridged connections between the microfluidic chip, the pumps, and the pressure sensors. All plastic components were 3D printed. Load-bearing components were 3D printed with a Prusa i3 mk3S, the T-junctions [22] with an Anycubic Photon Mono. Electronics and sensorics modules were fastened to the base plate with structural ISO M6 size threaded rods, whose internal components were fastened to load-bearing components with ISO M3 size bolts (metal fasteners are hidden on the explosion views for better clarity). The pump enclosure was fastened to the base plate with ISO M3 size bolts. The chip mount stage was set between spring-loaded knurled nuts (DIN 466 M6) to reduce vibrational sensitivity.

B. Electronics module

1) Flow control strategy

For the pressure-driven droplet generator, a dual-PID controller strategy with two feedback loops (inner and outer feedback loops, Fig. 4/a) was designed and implemented:

i) The inner feedback loop was used to rapidly reach target pressure levels in the microfluidic chip and to reduce pressure fluctuations, inherently induced by the droplet pinch-off process, the pulsatile nature of the micropumps and the rapid target pressure level approach. The inner loop consisted of PID controllers for each micropump separately.
ii) The outer feedback loop was used to reach and maintain user defined droplet size and generation rates through discretized light sensor data.

The proposed design of the dual-PID control strategy (depicted on Fig. 4/a) for the CogniFlow-Drop system is following:

1) The inner PID closed feedback loop obtained pressure readings from sensors 1 (S1) and 2 (S2) of pumps 1 and 2, respectively, as well as pressure readings from sensor 3 (S3) at the microfluidic chip's output.
2) The PID controller associated with each pump regulated the pressure drop across the chip based on the differential pressures (i.e., S1-S2, S1-S3) as feedback. The accurate and rapid control of pressures by the inner feedback loop action improved the stability and precision of the outer feedback loop.
3) The outer PID controller provided user-defined droplet size and droplet generation frequency set points (dset and fset) by adjusting the pressure of pump 1 and 2 respectively (i.e., disperse and continuous phase flows). The size related pressure target was derived from using the error (ed) between the set point (dset) and the average measured droplet size (dm). The generation frequency related pressure target was derived from using the error (ef) between the set point (fset) and the average measured droplet generation frequency (fin). By fixing the disperse phase pressure, the control variable relationships between "droplet size" to "disperse phase pressure" could be made as "droplet size" to "continuous phase pressure", depending on the sensitivity of the target parameter to the fluid phase type.

The PID controller parameters (i.e., proportional gain, integral gain, and derivative gain) were derived using a Genetic Algorithm (GA). The dual-PID control strategy, adapting the framework implemented with MATLAB, Simulink, was modified to include droplet generation frequency control for the presented version of the droplet microfluidics system, using Python.

2) Pump controller and pressure sensor stage

The pumping system embedded into CogniFlow-Drop was an updated version of the non-automated dual-channel piezoelectric pumping device demonstrated in our earlier work. Relevant notable modifications to our standalone pump PCBs ([26]) are mentioned in the electronic supporting information (ESI) S1.
While the base design with all its features was carried over, standalone operation (wireless communication and battery power) was not. Wireless communication was not necessary as the pump controller exchanged commands and sensor data, as well as received power, over a USB cable connecting the pump controller (ESP32) to the main controller (RPI). Additional updates were required to be made to the pump controller firmware from the earlier work ([26]) with relevant notable ones mentioned in ESI S1.
3) Communication, control, and signal processing stage RPI was selected as the main controller for the system due to its quad-core processor and extensive interfacing options. It ran Ubuntu desktop (ver. 21.10) with its tasks written in Python 3.9 and C++. With four cores, the RPI was able to dedicate one for each independent task:

1) Communication with the user, over local network, using the methodology described below.

2) Communication with the pump hardware described below

3) Interpretation of data obtained from the optical sensor, expanded upon below

4) Calculation of pumping pressure targets based on both the measured pressure data (obtained from task 2) and the resolved optical data (obtained from task 3), detailed below. The interpretation of links between tasks and their interactions with parts of the system, external from the Raspberry Pi, are shown in Fig. 5, and an explanation with more details about the internal mechanism of each task is described in ESI S2.

4) User interface Data and information flow are critical aspects when considering the design of any bioanalytical device. In our previous work we presented a framework for integrating event-triggered wireless data distribution and information flow into a bioanalytical device [26]. In this work, we focus on structured data serialization (along with metadata) using Google's Protobuf serialization protocol [27]. With this method, the number (and type) of devices in the network could be extended with minor edits to the data structures.

Inter-host communication was performed using an enhanced Communication Abstraction Layer (eCAL, v5.9.5) middleware [29]. The data rate through eCAL was payload dependent, and the employed data-centric communication architecture offered low latency communication with fair reliability.

Data was sent between devices along with a unique device ID and name, chip name, flow rate, transmission/-reception status, flag for different process activation, and droplet size (see example in Fig. 6/a) and message ID. On the publisher/sender side, a Protobuf message object (see example in Fig. 6/b), was created based on the data structure defined and serialized using the Protobuf protocol, followed by being broadcast to any listening device. For any device to catch the broadcast data, an eCAL subscriber/receiver function was cyclically polled. Concurrently, the method was used in reverse to transfer data from the controlled device to the controller. Devices could communicate with each other in an event-triggered wireless or wired manner. The overall data transfer mechanism is shown in Fig. 7.

The CogniFlow-Drop prototype could be controlled via the graphical user interface (GUI, Fig. 8) by defining parameters for droplet generation rate and size and passing them on using the available task specific buttons. If the chosen parameters were not within acceptable limits or of the wrong type, an error was presented, asking for appropriate corrections. The entered parameters were serialized by protocol and sent to the other device in the form of messages. Unless manually halted from the GUI, tasks were halted automatically on the controlled device after completion.

5) Optical feedback signal acquisition

The digitization PCB before signal processing on RPI, was made with three stages.

The first stage, receiving the feedback signal directly from the sensorics module described in Section II-C, was a 2 nd order Sallen-Key low pass filter. The filter was designed for detection of up to 5000 droplets per second without distortions, with a cutoff frequency at ~7.26 kHz and a quality factor of ~0.64. Filtering was necessary to reduce noise acquired from the system (in most part from the used switch-mode PSUs).

Before discretization with an ADC, to maximize the information gained from the incoming, filtered optical signal, per bit, an adjustable inverting amplifier stage was used. This enabled scaling of captured waveform to the ADC's analog input limits. Additionally, this filter-amplifier circuit was designed to discard any inherent DC component from the optical signal and bias it instead with 2.5 V, to position it in the middle of the 0 to 5 V ADC measurement window.

The converter used was a 16-bit ADC (ADS8681, Texas Instruments). In the presented version of the system, the PCB on which it was installed was a perforated protoboard, which introduced additional noise to the measured signal due to a non-ideal splitting of digital and analog signals.

C. Sensorics module

1) Droplet measurement hardware

Cost-effective imaging and non-imaging droplet flow sensor prototypes with up to 750 frames per second throughput are known. With cost-effectiveness in mind, a more compact setup with a higher throughput for capturing droplets during generation was constructed as follows (Fig. 9):

A light source constructed of a cold white 1 W wide-beam LED (Fig. 9/a). Soldered to a PCB with large copper areas for heat dissipation. Current-limited to -150 mA using an LED driver.

The light source was covered with a diffusing lens (Fig. 9/a) to reduce its beam angle and reduce beam intensity variations from smaller misalignments with the sensor axis.

A PDMS-glass microfluidic chip, further detailed in Section II-D (Fig. 9/b).

A thin metal plate, with a noise-reducing micro-drilled pinhole (sized proportionally with the chip's junction width), positioned beneath the microfluidic chip to increase the relative dimming impact of a passing droplet (Fig. 9/b).

Based on Texas instruments application, using a 1 MΩ as feedback resistor instead, to obtain a gain of 1 MV/A and a 1.3 pF capacitor for stability at higher frequencies, a photodiode (PD) sensor (Osram SFH 2240, Fig. 9/c) was connected to a transimpedance amplifier (TIA). A 20x microscope lens was mounted to the PCB, over the sensor, for improved focus of the droplets flowing in the microchannel.

Using the droplet flow sensor setup described above, a theoretical detection throughput was raised above 10000 droplets per second.

2) Detection of droplet shadows

The chip mount (Section II-A-2-b and Fig. 2/2/b) was positioned between the light sensing PD and the light source, all of which were vertically aligned to the pinhole under the outlet junction of the microfluidic chip (Fig. 9). As generated droplets were moving over the pinhole, a shadow was cast through it, onto the PD. The changing current through the PD was converted to voltage using a high-gain TIA, passed on to a connected filter-amplifier circuit in the electronics module (Section II-B-5 and Fig. 2/1). The filtered signal moved through a DC decoupler into an inverting and level-shifting amplifier circuit. The extra amplification also provided compensation when the height of the light source was adjusted. The inversion of the photodiode voltage meant that any increase in the shadow corresponded to an increase in measured voltage. The filtered and amplified photodiode output was discretized with the ADC and sent over to the main control board using SPI. The RPI dedicated 1 of its 4 cores to communicating with the ADC, enabling photodiode voltage sampling rates of up to ~440 kHz (without an interpretation algorithm).

D. Fluidics module

1) Droplet generation chips

The microfluidic chip designs is known. The principle design (Fig. 10/a) was a flow-focusing device (FFD) laid out on an SU8 mask in multiple copies with different junction widths and geometries. In TABLE II the chip designs used in experiments in this work are shown. Silanized silicon-SU8 masks were purchased from the BioMEMS group of the Hungarian Academy of Sciences. PDMS-glass chips were fabricated as follows: 1) PDMS was molded off the mask (PDMS was allowed 3 days at room temperature to cure and degas), 2) the PDMS was punched to create ports using a tissue biopsy tool, 3) PDMS and glass surfaces were cleaned from dust, 4) surfaces were activated with oxygen plasma generated by a handheld corona discharge surface treater, 5) surfaces were bonded, 6) chip walls were coated with Novec™ 1720 Electronic Grade Coating.

TABLE II Parameters for microfluidic droplet generator chips

| Chip variant | A | B | C |
|---|---|---|---|
| Junction width [mm] | 90 | 125 | 280 |
| Junction angle of entry [°] | 90 | 38.33 | |
| Oil inlet width [mm] | 360 | | |
| Water inlet width [mm] | 6 | | |
| Outlet width [mm] | 0.6 | | |
| Number of filters | 2 | | |

2) Mounting of the droplet generation chip

The removable chip holder (Section II-A-2-b) in the sensorics module (Fig. 2/2/b) had a 2 by 2 mm square hole at the center, over which the metal plate (Fig. 9/b) with a pinhole was placed. The pinhole was manually centrally aligned with the square hole in the chip holder. Lastly, a droplet generation chip was positioned on the pinhole plate and fastened to the holder. The chip was aligned to have the pinhole beneath the chip's outlet channel, ~300 $\mu$m after the cross-junction. For the used chips, this distance mitigated capturing forming droplets and deforming droplets flowing into the wider section of the outlet where capturing distinct droplets could be jeopardized by the loss of gaps between droplets. The assembly was attached to the top of the 3 DoF chip mount (Section II-A-2-b and Fig. 2/2/b).

Evaluation methodology and results

The evaluation was carried out both on system and on a submodule level.

The first test series (Section III-A) focused on evaluation of system submodules or groups of submodules. Fine-tuning steps were also taken to prepare for the system integration. The second test series (Section III-B) focused on characterizing and benchmarking the integrated system prototype in droplet generation.

In all test setups, droplets were generated using fluids as described in TABLE III.

TABLE III FLUID PHASES USED IN DROPLET GENERATION EXPERIMENTS

|  | A | B |
|---|---|---|
| Disperse phase | deionized water (DIW) | deionized water (DIW) |
| Continuous phase | Sigma-Aldrich 33079 mineral oil + 2% w/w surfactant (Span® 80, Sigma-Aldrich) | HFE 7500 fluorocarbon oil + 2% w/w surfactant (perfluoropolyether (PFPE)-poly(ethylene glycol) (PEG)-PFPE triblock) |

In all test setups including a camera, a high-speed camera module (acA640-750uc, Basler) was used. The camera frames were captured in real time on the computer using Basler's pylon Viewer software.

A. Submodule evaluation

The test setup used (Fig. 11/a) in this section was an early proof-of-concept implementation of the full experimental setup presented in Section II-A. The setup was derived from components demonstrated in our earlier works ([25], [26]). In the setup, DIW was used as the disperse phase, oil A or B as the continuous phase. Both phases were pumped into the droplet generation chip using our custom pumping system based on Bartels Mikrotechnik micropumps (mp6-liq). Results are presented in Section IV-A.

1) Pressure-based system feedback modelling

Tests done with the following methodology gave results for: characterization of pressure control, definition of voltage to pressure transfer functions and tuned pressure feedback PID gains using the transfer functions.

The pressures at the inlets and outlets of the microchannel were measured using Honeywell pressure sensors MPRLS0015PG0000SA and MPRLF0250MG0000SA, respectively, with a sampling rate of ~166 Hz. To obtain pressure to pump driving voltage relationships, driving voltage tests were conducted. For three chip variants (relevant chip dimensions in TABLE II), the driving voltage of the piezo pumps ranged from 25 V to 250 V, with a step size of 25 V. Corresponding pressures were recorded for a duration of one minute at each step with the steady state averaged as the resulting pressure value. Measurements were done separately for DIW and oil A. Unwanted transients or spikes in the experimental data were removed using median filtering (performed in MATLAB).

To tune the PID gains, experimental data (from our earlier works [23], [24]) demonstrating the effect of inlet pressure on droplet size were used in MATLAB to derive pumping system component transfer functions. The transfer functions were implemented in Simulink in a setup-derived closed loop feedback model. PID K-values were found among six objective function criteria obtained from using genetic algorithm method: the Integral Squared Error (ISE) criterion; the Integral Time Squared Error (ITSE) criterion; the Integral of Time Absolute Error (ITAE) criteria; the Integral of Absolute Error (IAE) criterion; the Mean Squared Error (MSE) criterion; the Integral Error (IE) criterion.

2) Syringe pump vs. pressure-driven pump

As laboratories often use syringe pumps for droplet microfluidics, the performance of our pressure-based micropump system against syringe pumps was compared.

Two syringe pumps (NetPump, SpinSplit LLC, Budapest, Hungary) with plastic syringes were used to pump oil A and DIW into chip variant A. Pressure sensors were set in the established configuration (Fig. 11/a). The syringe pumps were connected to local network via Ethernet and interfaced with SpinStudio (SpinSplit LLC, Budapest, Hungary) on a desktop computer. Droplet formation was observed using a camera, placed beneath the FFD's cross-junction. Syringe pumps were set to run for about four minutes, with fixed flow rates (Fig. 14/a), producing uniform droplets. One minute from the end of the steady state period of the measured oil and water pressure drops over the chip were averaged and used as targets for the pressure pump PIDs corresponding to the matching fluid phase. Followingly, the inlet tubes were disconnected from the syringe pumps and connected to the pressure pumps. For two minutes, pressure pumps were pumping oil and water with closed loop control, with comparable pressure (Fig. 14/b).

3) Sensorics, photodiode voltage interpretation

Before droplet observations with a PD, a camera was used to analyze possible scenarios. Droplets were generated with DIW in separate combinations with oil A and B (TABLE III). Droplets were recorded as image series to a computer and afterwards analyzed visually. Additionally, images of droplets were scanned through a custom pixel color summation program, used to estimate possible collectable waveforms from the PD. The custom program had an additional feature to roughly mimic a variable pinhole (determinable by the angle of the droplet generation chip in the chip mount).

4) System controller benchmarking

The selected controller (RPI) had a quad core processor limiting concurrent tasks to four. Additionally, with RPI running a desktop OS, loop stability of each task, split using multiprocessing Python library, was measured in a one-time operation - finishing with complete termination processes. As this required all connected submodules, the test took place at the final stages of integration. All tasks running in parallel on RPI were timed over a 90 second droplet generation operation using chip variant C with oil B.
Furthermore, three additional 90 second tests were run (2 with chip variant C and 1 with chip variant B). After 45 seconds into the tests, ~3 seconds of ADC data (from task/core 3) was logged in more detail to analyze controller related latency and performance with a custom droplet interpretation algorithm. In the same period, a sample image was taken from the waveform entering the ADC, visualized on a connected oscilloscope (DSO5014A, Keysight).

B. System Evaluation

In system evaluation methodology, unless specified otherwise, oil B (TABLE III) was used as the continuous phase.

1) Droplet size and frequency control

Two sets of target series tests (size and generation rate) were conducted for each of the two chip variants (B and C) - shown on TABLE IV-VII. All samples in series were given 15 seconds for stabilization which was discarded from further calculations. The remaining 21 seconds for each sample was used for CV% and error calculations. Due to geometric differences between chip variants, target ranges of named series were limited to combinations more likely to produce droplets.

TABLE IV Chip B - Voltage target series over fixed generation frequency targets.

|   | Fixed Generation Rate Target | Voltage / Size Target 1 | Voltage / Size Target 2 | Voltage / Size Target 3 |
|---|---|---|---|---|
| 1 | 200 Hz | 2.0 V | 2.8 V | 3.6 V |
| 2 | 400 Hz | 2.0 V | 2.8 V | 3.6 V |
| 3 | 600 Hz | 2.0 V | 2.8 V | 3.6 V |
| 4 | 800 Hz | 2.0 V | 2.8 V | 3.6 V |

TABLE V. Chip B - Frequency target series over fixed voltage (size) targets

|   | Fixed Voltage / Size Target | Generation Rate Target 1 | Generation Rate Target 2 | Generation Rate Target 3 | Generation Rate Target 4 |
|---|---|---|---|---|---|
| 1 | 2.0 V | 200 Hz | 400 Hz | 600 Hz | 800 Hz |
| 2 | 2.8 V | 200 Hz | 400 Hz | 600 Hz | 800 Hz |
| 3 | 3.6 V | 200 Hz | 400 Hz | 600 Hz | 800 Hz |

TABLE VI. Chip C - Voltage target series over fixed generation frequency targets

|   | Fixed Generation Rate Target | Voltage / Size Target 1 | Voltage / Size Target 2 | Voltage / Size Target 3 | Voltage / Size Target 4 |
|---|---|---|---|---|---|
| 1 | 200 Hz | 3.2 V | 3.4 V | 3.6 V | |

(continued)

|  | Fixed Generation Rate Target | Voltage / Size Target 1 | Voltage / Size Target 2 | Voltage / Size Target 3 | Voltage / Size Target 4 |
|---|---|---|---|---|---|
| 2 | 300 Hz | 3.2 V | 3.4 V | 3.6 V | 3.8 V |
| 3 | 400 Hz | 3.2 V | | | |
| 4 | 500 Hz | 3.2 V | | | |

TABLE VII. Chip C - Frequency target series over fixed voltage (size) targets.

|  | Fixed Voltage / Size Target | Generation Rate Target 1 | Generation Rate Target 2 | Generation Rate Target 3 | Generation Rate Target 4 | Generation Rate Target 5 |
|---|---|---|---|---|---|---|
| 1 | 3.2 V | 200 Hz | 300 Hz | 400 Hz | 500 Hz | 600 Hz |
| 2 | 3.4 V | 200 Hz | 300 Hz | 400 Hz | 500 Hz | 600 Hz |
| 3 | 3.6 V | 200 Hz | 300 Hz | 400 Hz | | |
| 4 | 3.8 V | 200 Hz | 300 Hz | 400 Hz | | |

2) Measurement of coefficient of variability of generated droplets

To measure the stability of droplet generation with the proposed system, coefficients of variability (CV%) were calculated from "digitized" droplet data (relative droplet size over the photodiode as voltage and droplet generation rate as frequency from droplet-to-droplet period) obtained with specified droplet feedback PID targets after the setup was ran through the calibration algorithm described in ESI S3. CVs were calculated from voltage and frequency series obtained from dual-PID tests, allowing 15 seconds for stabilization at the start of each stage. This left 21 seconds of stabilized data on each target for CV calculation. CVs were also calculated from additional datasets made with longer stabilization (30 s) and stable periods (45 s). As generation frequency did not strictly apply to droplet length, CV of generation frequency was not combined with relative size CVs. However, droplet generation frequency target series were further quantitatively analyzed via standard deviations and CVs (further detailed in ESI S4). Multiple CV sets were required for observing the impact from droplet generation frequency, pumping frequency (as piezo pump driving frequency) and average pressure in the chip to droplet size CV. In addition, to attest to the meaning and comparability of voltages obtained from the photodiode, claimed as corresponding to droplet size, visual data of droplets was needed. For visual data, droplets, generated with fixed pressure targets, were collected into an Eppendorf Tube® to be measured afterwards. Imaging for measurements was done with a trinocular microscope (BX61, Olympus) using a camera (DP70, Olympus) and a 4x/0.16 lens (UPLSAPO, Olympus). CVs and averaged cross-sectional areas and diameters were calculated using ImageJ software (further described in ESI S5). For better viewing, droplets were pushed into Countess™ Cell Counting Chamber Slides (Thermo-Fisher) with a channel height of 100 $\mu$m.

Results

Droplets were generated as described above.

A. Submodule evaluation

1) Pressure-based system feedback modelling

With the ramping pump driving voltage (25 V to 250 V) tests, linear correlation between voltage and pressure generated in tests with all chip variants were observed (Fig. 12). The relationship of pressure drops across the chip to pumping voltages varied for the different chip variants. This was quantified with the voltage-to-pressure coefficient (Cvp). Furthermore, while the rising trend of the Cvp of water tests was rising along with the cross-junction width, the ratio of water and oil Cvp was different between chips with different oil entry angles (Fig. 12/a-b vs. Fig. 12/d-e). The coefficients obtained with chip A were used in the controller design to account for differences in junction widths.

The system components were mathematically represented as transfer functions in eqns. 1-3, using the collected data in MATLAB software.

$$\mathrm{t.\,f._{pwat}} = \frac{-17.42s + 83.92}{s + 0.69} \qquad (1)$$

$$\mathrm{t.\,f._{poil}} = \frac{-8.40s + 30.6123}{s + 0.216} \qquad (2)$$

$$\mathrm{t.\,f._{chip90}} = \frac{19.04s + 0.339}{s + 0.275} \qquad (3)$$

Where t.f.pwat is the transfer function of the water pump, t.f.poil the transfer function of the oil pump, and t.f.chip90 the transfer function of the chip variant A. From Simulink results the controller parameters with the lowest fitness values (error) were chosen for real-world experiments. PID's Kp, Ki, Kd values for water pump (10.5, 60.77, 1.64e5), obtained from the IE objective function, resulted in good long-term stability, albeit with an overshoot, whereas Kp, Ki, Kd values (6.69, 46.10, 5_81e-5), obtained from the IAE objective function, resulted in a response with negligible overshoot, but instead with oscillations around the target value. Based on the comparison of GA tuning results (Fig. 13), manual adjustments to Ki were made to prevent overshoot and maintain good stability, with new Kp, Ki, Kd values (10.5, 17.5, 5.81e-5) for water. Following the same process, Kp, Ki, Kd values were found for oil (40.0, 18, 4.78e-4).

2) Syringe pump vs. pressure-driven pump

The pressure stabilization and steady states of the two test scenarios described in Section III-A-2 are shown in Fig. 14. Syringe pumps took approximately 120 seconds to reach a reasonable steady state for new pressure targets, with minor oscillations persisting. Slower response time for syringe pumps was attributed to linear operation of the motors' speeds, however, the likely cause for persistent oscillations was attributed to inconsistent friction of the syringe's rubber gasket. In comparison, pressure-driven micropumps showed better responsiveness and stability between changing input pressure targets, taking about 10 seconds to reach the defined inlet and outlet pressure values.
The faster response rate helped significantly reduce experiment runtimes and reagent waste during the system evaluation tests (Section IV-B, e.g., exploring ranges of producible droplet sizes and generation rates).

3) Sensorics, photodiode voltage interpretation

While generating droplets using oil A, the formed droplets (Fig. 15) indicated that once the droplet's diameter exceeded the larger dimension of the channel (Fig. 15/c), the shadow caused by refractions in the phase transition region would intensify. Furthermore, a central low refraction region would emerge.
The possible impact of the low refraction region on the captured photodiode light intensity waveform was estimated from the custom pixel color summation program (Fig. 16). Given the fixed size moving window on Fig. 16/a-c, it was noted, that even with a longer than "window size" droplet, whose diameter was less than the larger dimension of the channel (Fig. 16/b), the estimated waveform gained little to no distortions. Mild distortion could be attributed to the bullet-like shape of the droplet. However, a much more noticeable distortion was noted once the low refraction region became significant relative to the window size. The non-phase transition region had the potential to invert the tip of the waveform. The impact of this effect was amplified with a less viscous continuous phase, as that reduced the surface tension of the droplet and the intensity of the droplet's shadow along with it.
Using oil B for the continuous phase, generated droplets showed inherently thinner phase transition regions and gave way for larger low refraction regions (Fig. 17). The images show a case where not only was the phase transition region very thin, but the aligned droplet acted like a lens (Fig. 17/c). To further inspect the impact of such cases, consecutive frames were viewed in the custom pixel color summation program (Fig. 18). Due to the usage of a pinhole, the extra shadows at the edges (background noise) were subtracted from further intensity calculations using the 6 th additional frame (Fig. 18/f). Seen from Fig. 18 with a droplet, sized large enough to be squished in the microfluidic channel, flowing in low viscosity oil B, the possible recorded waveform for a single droplet could resemble a much more severe case of Fig. 16/c - instead of a slightly dipping peak, a waveform section representing a single droplet with a possible dip as low as to split into two discernible droplets.

4) System controller benchmarking

Individual task duration details can be seen on TABLE VIII. Maximum loop durations of the waveform interpretation and pumping pressure target calculation tasks (marked with * in TABLE VIII) were caused by spikes in OS latency. Noticeably longer than average maximum loop durations for the remaining tasks were caused by delays from communication termination procedures included in the timing of the last loop. Total durations of tasks other than the pumping pressure target calculation task, where the main operation timer was running, were longer due to beginning their termination process after the defined 90 s time limit. Their difference was caused by sequential termination process (some extending for multiple seconds due to large log file generation). For droplet waveform interpretation task, the average loop duration extended to ~6.5 μs, resulting in a mean sampling rate of ~153 kHz. The discrepancy between minimum loop duration of pump communication task (-15 ms) and pump sensor update rate of ~166 Hz (6 ms) was attributed to having used asynchronous communication method.

TABLE VIII CONTROLLER SOFTWARE's TASK LOOP DURATION

| | Core 1 – User interface coms. (Section II-B-3-1) | Core 2 – Pumping system coms. (Section II-B-3-2) | Core 3 – Droplet interpretation (Section II-B-3-3) | Core 4 – Droplet PID calculations (Section II-B-3-4) |
|---|---|---|---|---|
| Maximum [ms] | 203.4370 | 215.0430 | 20.25914* | 21.05400* |
| Average [ms] | 102.0334 | 18.98948 | 0.006515 | 0.169749 |
| Minimum [ms] | 100.6310 | 14.74400 | 0.002861 | 0.104000 |
| Loops counted | 1005 | 4 758 | 14 640 000 | 530 200 |
| Total [s] | 102.54 | 90.35 | 95.38 | 90.00 |

In the OS latency and droplet interpretation algorithm impact analysis, droplet waveform from the first additional test with chip variant C (Fig. 19) indicated that the pinhole-aligned droplets were seen as an increase in light intensity. Meaning that the droplets functioned as lenses instead of obstacles. In this scenario, the "peak" of the alignment was measured at the "trough". Each "trough" could be imagined as a more severe form of the dip shown in Fig. 16/c. Each "trough" was accompanied by its darker incoming and outgoing edges (Fig. 18/a, 18/e). From the logged ADC data, a sample section (Fig. 20) showed the limits of RPI running code written in Python on a non-real-time OS and specific functions circumstantially interacting poorly with the OS. As the average ADC task loop duration was measured around ~6.5 μs (TABLE VIII), Python's multiprocessing Queue functions empty() and get_nowait(), called after 100 mV above the average line for every other droplet, delayed the loop duration minimally another ~100 μs producing erroneous droplet size measurements. In comparison, the second test with chip variant C (Fig. 21) showed a waveform with similar sharp peaks, but each with longer duration. Long enough to preserve the peaks captured by the ADC (Fig. 22). In the third additional test, with chip variant B, OS latency was spotted causing the loss of 2-3 consecutive droplets (Fig. 23) with an unexpected delay between two ADC sampling cycles. Albeit being relatively rare, the measurement error of such events was mitigated to prevent destabilizing the flow rates. When time delay between two ADC samples exceeded 30% of the average droplet generation period, the following erroneous droplets were excluded from the logs and use in the droplet feedback PIDs. It improved fluidic stability, but in the case of random OS delays, at the cost of up to 10% of generated droplets not getting logged (losses were lower with lower generation rates). Likewise, in the case of get_nowait() delay, if it exceeded 30% of the average droplet generation period, the irregular droplet measurement would be excluded from the log and PID feedback.

B. System evaluation

After assembly, programming, and fine-tuning through preliminary testing, connection between a laptop and the CogniFlow-Drop device was established through a Wi-Fi hotspot to validate the communication interface. After a successful connection, the interface effectively transmitted and received message packets every ~100 ms, artificially delayed with eCAL message polling delay on the RPI. Other functional tests with the remote control included:

initiating setup calibration (tied to variables: chip position/angle, chip variant, liquids used),
initiating droplet generation with desired size and generation rate,
initiating droplet size (V) target series test,
initiating droplet generation rate (F) target series test.

Each feature of the GUI (Fig. 8) was proceeded to be used as remote initiator for the following system evaluation steps.

1) Results of droplet size and frequency control test series

During experimentation, some target droplet size and generation frequency combinations did not yield droplets regardless of having used selective ranging - highlighted on TABLE VI-VII Overall, chip C showed lower ranges for both sizes and generation rates. Additionally, chip C behaved uniquely between voltage and frequency series, as the combination of (400 Hz; 3.4 V) in voltage series did not yield droplets, but in contrast, was unexpectedly stable in frequency series. This hinted to higher sensitivity to size target alterations during droplet production combined with how current droplet feedback PID handles high instability.

Target series over all four sets, named in Section III-B-1, resulted in averaged droplet size errors, seen on Fig. 24, which indicated higher accuracy for droplet size control with chip B, more specifically with droplet size (V) series when the marked outlier of ChipB-Fseries was taken into account. With an average error of -0.06%, ChipB-Vseries obtained averaged sizing errors between +2.86 to -1.79%. Contrast of accuracy of reaching average target size, can be seen on droplet capture graphs between ChipB-Vseries (row 4 from TABLE IV) and ChipC-Vseries (row 2 from TABLE VI) on Fig. 24/b and Fig 24/c respectively, with target sizes per sample, segmentally overlayed as orange horizontal lines. Target size errors on Fig. 24/b were [+0.35; -1.79; -1.56] % respectively. Together with the fixed frequency (200 Hz) accompanied with varying droplet size targets, frequency errors of [+0.88; -2.00; -5.63] %, respectively, showed a decreasing total output volume with the combined error staying further and further below the targets. Target errors on Fig 24/c were [+5.62; +2.88; -2.03; -7.24] % respectively. For the comparably reduced functional size range that channel geometry of chip C offered, target size control did not yield droplets in all requested sizes. This could largely be contributed to inclinations caused by the channel geometry. This was made clear from its accompanied averaged frequency target errors of [-1.99; +2.65; -0.73; -0.30] % respectively, which did not follow the pattern of size errors. The secondary contributor was attributed to the erroneous droplet size averaging caused by what was shown on Fig. 20. Due to alterations in perception of captured droplet sizes, calibration for chip C test series had been segmentally impacted where droplet waveforms exhibited shapes more predisposed to peak losses.

Additionally, averaged droplet generation rate errors, seen on Fig. 25/a, again indicated higher accuracy for droplet rate control with chip B, more specifically with generation rate (F) series when marked outliers of ChipC-Fseries were taken into account. With an average error of +0.94%, ChipB Fseries obtained averaged generation rate errors between +3.62 to -1.65%. Contrast of accuracy between the best and the worst captured series of reaching average target generation rate, can be seen on droplet capture graphs between ChipB-Fseries (row 2 from TABLE V) and ChipC Fseries (row 1 from TABLE VII) on Fig. 25/b and Fig. 25/c respectively, with target sizes per sample, segmentally overlayed as orange horizontal lines. Target averaged frequency errors, with chip B, on Fig. 25/b were [-1.43; +0.86; +1.83; +1.67] % respectively. Together with the fixed size target (2.8 V) accompanied with the example varying frequency targets, averaged size errors of [+0.50; -0.61; +0.61; +0.14] % respectively, showed no explicit relationship between size and frequency errors. This alluded to lesser impact from frequency alterations during droplet generation, in other words, lesser impact from changes in oil pressure rather than water pressure. Target averaged frequency errors, with chip C, on Fig. 25/c were [+1.93; +4.11; +6.78; -5.11; - 20.61] % with accompanying size target (3.2 V) errors of [+5.91; - 0.06; -1.56; -1.09; -1.13] %, respectively, showing little correlation in comparison. This example showed large fluctuations in periodicity, but small droplet size variation (similar to Fig. 24/c from ChipC-Vseries).

2) Measurement results for coefficient of variability of generated droplets

a) Droplet size data (PD voltage discretized with the ADC) from consecutive droplet size and frequency target series V and F series performed in Section IV-B-1 resulted in averaged droplet size CVs represented on Fig. 26/a and averaged droplet generation rate CVs represented on Fig. 26/b. Medians of averaged CVs from Fig. 26/a, [6.83; 6.33; 5.78; 6.84] %, respectively, showed that while the measured droplet sizes in tests with chip C were off noticeably more than with chip B, the size stability can be better. However, minimum CVs [3.10; 3.30; 4.40; 3.60] % showed favorability towards chip B. While some maximum CVs reached over 10%, more significant reasons for the larger instabilities stemmed from the chosen pressure combinations working less favorably with chosen chip geometries. From the averaged droplet generation rate results on Fig. 26/b, the difference between chip B and C was hard to mistake. As the CVs between size and rate for chip C, have a noticeable difference in scale, it was evident that the generation frequency of droplets does not inherently link to droplet size in a pulsatile pressure-based pumping system.

Further analysis of target F series provided relationships between the generation rate to generation rate CVs at each obtained average frequency level with standard deviation (SD) bars and between the target generation rate to column averaged SDs (SD averaging for chip C was done conditionally, further explained in ESI S4), for chips B and C respectively on Fig. 27/a and Fig. 27/b (numeric details in ESI S4, TABLE I-IV). Generation rate CVs for chip C revealed behavioral outliers with target size and rate combinations in row 1 of TABLE VII (while producing droplets in a stable manner with size CVs < 10%, the frequency CVs were well above 25%). By omitting the TABLE VII row 1 CVs and SDs from comparison between chip variants, the general rule of increasing SD with increasing generation rate becomes noticeable.

By having excluded row 1 SDs also from averaging of SDs, chip B and C generation rate averaged SDs ($S\overline{\overline{D}}$) showed analogous trends. Both show the highest correlation to exponential relationships. Additionally, for both chip types, cropped

S $\overline{\overline{D}}$ s revealed high linear correlation regions up to the second highest tested respective generation rate targets (Fig. 27) which in terms of generation rates would narrow down on the stable frequency region of use for that specific chip geometry and fluidic phase combination. Between the observed initial and cropped data, beyond a certain generation rate, the behavior of frequency stability deteriorates from linear into exponential regime. The possible causes of which could be 1) stability limits, inherited from FFD channel design in combination with pulsatile flow and fluid phase properties, 2) hardware and/or software limits, RPI's droplet interpretation loop delays introducing increasing number of erroneous readings.

b) Droplet size data (PD voltage discretized with the ADC) from single shot droplet size and frequency targets

Using chip B with different calibration (chip position slightly tilted in the light tower), one of the better examples with lowest target error in combination with the lowest droplet size CV (400 Hz, 4.4 V) achieved, can be seen on Fig. 28 with graphed droplet sizes and generation rates respectively. From the size dataset on Fig. 28/a, the CV% was calculated to be 1.77% with a percentage error from target droplet size of +0.27%. From frequency dataset on Fig. 28/b, the CV% was calculated to be 6.67% with a percentage error from target droplet generation rate of +0.22%.

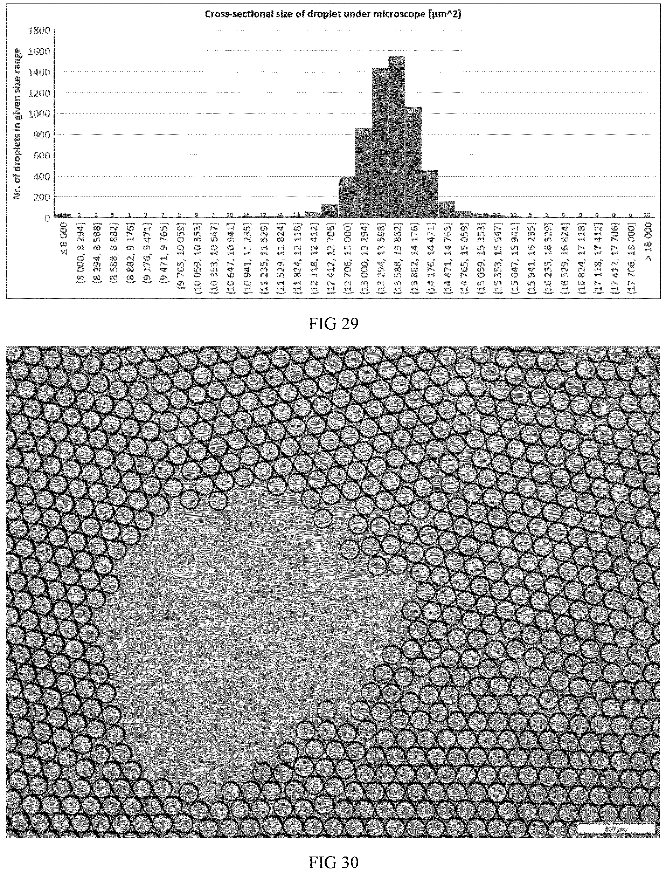

c) Droplet size data (microscope camera → ImageJ) from single shot pressure targets Droplets were collected from tests with droplet feedback PIDs disabled to obtain a baseline. Tests were done with fixed water pressure at 9 kPa and several oil pressure targets in the range of 9 kPa - 12 kPa, ran over 90 seconds, where oil pressure at 12 kPa yielded the best results with 7.7% CV, with a spread of cross-sectional areas shown on Fig. 29. Average cross-sectional surface area of recorded droplets was measured 13 558.9 $\mu$m2 , translating into an average planar diameter of 131.4 $\mu$m when droplets were flattened in the imaging slide. A sample from a series of images taken of droplets in the droplet imaging slide can be seen on Fig. 30.

One of the main advances of the invention is the modularity that opens the way to various future upgrades: use-cases enabled by additional modules as well as upgrades to the core modules.

The system can be used for inline imaging cytometry by adding a high-speed camera/detection module (preferably, with a cell incubation module)

The system can be used for cell sorting by adding a droplet sorting module, together with the aforementioned imaging cytometry modules for further downstream processing of select cells or cell lines. The single-cell resolution and chemical isolation provided by droplets greatly increases the throughput, while reducing reagent and sample waste compared to current state-of-the-art flow cytometry setups.

B. Possible upgrades to the prototype system

To improve the droplet capture rate and reliability, an additional ESP32, or a similar low-cost device with an SPI bus and two cores, could be placed between the RPI and ADC to take over task 3 from the RPI. Additionally, the added computational power could enable more complex waveform analysis (e.g., waveform slope measurement and droplet lensing effect detection). •

To improve the droplet size and generation frequency control accuracy and fault tolerance, machine learning models could be implemented on the RPI.

To improve automation, the following features could contribute: self-priming, self-cleaning, autochip-positioner, auto-pinhole-positioner, self-analyzing (e.g., detection of blockages or leaks in the fluidics module), auto-focusing, and auto-calibration-ranging. • To improve the user interface, the GUI, after calibration, could offer feasible droplet size and generation frequency ranges, with highlighted combinations yielding the best CV% for that specific chip and position. Furthermore, by user request, the GUI could poll captured waveform samples during operation. To correlate relatively inexpensively and rapidly measured droplet sizes from their shadows to real droplet volume, a secondary in-line camera setup could be joined in the communication line over eCAL. To image droplets during cytometry.

References

[13] W. Zeng et al., "Precise monodisperse droplet generation by pressure-driven microfluidic flows," Chem Eng Sci, vol. 248, p. 117206, Feb. 2022, doi: 10.1016/J.CES.2021.117206.

[14] X. Duan, Z. Zheng, Y. Luo, and C. Song, "Closed-loop feedback control for droplet-based microfluidics: a characteristic investigation on passive and on-demand droplet generation," no. January, p. 31, 2023, doi: 10.1117/12.2666602.

[15] W. Zeng and H. Fu, "Precise monodisperse droplet production in a flow-focusing microdroplet generator," Chemical Engineering Research and Design, vol. 160, pp. 321-325, Aug. 2020, doi: 10.1016/J.CHERD.2020.06.002.

[18] D. F. Crawford, C. A. Smith, and G. Whyte, "Image based closed-loop feedback for highly mono dispersed microdroplet production," Sci Rep, vol. 7, no. 1, pp. 1-9, 2017, doi: 10.1038/s41598-017- 11254-5.

**EP 4 527 501 A1**

[19] B. Miller et al., "Manipulation of microfluidic droplets," EP2411148B1, 2010

[36] W. Zeng, S. Li, and Z. Wang, "Closed-loop feedback control of droplet formation in a T-junction microdroplet generator," Sens Actuators A Phys, vol. 233, pp. 542-547, 2015, doi: 10.1016/j.sna.2015.08.002.

[37] Y. Xie, A. J. Dixon, J. M. R. Rickel, A. L. Klibanov, and J. A. Hossack, "Closed-loop feedback control of microbubble diameter from a flow-focusing microfluidic device," Biomicrofluidics, vol. 14, no. 3, p. 034101, May 2020, doi: 10.1063/5.0005205.

[38] S. Motaghi, M. Nazari, N. Sepehri, and A. Mahdavi, "Control of droplet size in a two-phase microchannel using PID controller: A novel experimental study," Amirkabir Journal of Mechanical Engineering Amirkabir J. Mech. Eng, vol. 53, no. 7, pp. 1013- 1016, 2021, doi: 10.22060/mej.2020.18250.6783.

[39] H. Fu, W. Zeng, S. Li, and S. Yuan, "Electrical detection droplet microfluidic closed-loop control system for precise droplet production," Sens Actuators A Phys, vol. 267, pp. 142-149, 2017, doi: 10.1016/j.sna.2017.09.043.

## Claims

1. An integrated modular system for automated generation of droplets in microfluidic applications, comprising:

   a first pump, operating in a water phase and having a water inlet, and a second pump, operating in an oil phase and having an oil inlet, said first and said second pumps connected to a common outlet for outputting water-oil droplets, wherein said first pump and said second pump being piezoelectric micropumps,
   a first pressure sensor at the water inlet and a second pressure sensor at the oil inlet and a third a third pressure sensor at the outlet,
   said system equipped with an inner feedback loop for controlling pressures applied by said first pump and said second pump, wherein said inner feedback comprised two PID controllers for said first pump and said second pump;
   said system further equipped with an outer feedback loop for controlling droplet size and droplet generation rate, wherein said outer feedback comprises an optical module, comprising a light source and light detector on said outlet for determining the droplet size; and
   said system further equipped with a controller device for controlling the system.

2. As in claim 1, wherein said optical module having a pinhole between the light path from said light source to said light detector.

3. As in claims 1 to 2, wherein said light source is LED.

4. As in claims 1 to 3, wherein said light detector is a photodiode.

5. As in claims 1 to 4, wherein said controller having a processing device with at least two cores, wherein first core is dedicated for pump control and second core is dedicated to optical signal processing.

6. As in claim 5, said processing having four cores, wherein a third core dedicated to droplet generation feedback calculations and a fourth core is dedicated to communication and user interaction.

7. An method for automated generation of droplets in a system, comprising:

   receiving water phase from a first pump and receiving an oil phase from a second pump, into a common outlet;
   controlling the pressures of each pump, using inner feedback loop with PID control, based on pressure differential at corresponding inlets and outlet of said first and said second pump, and
   controlling the droplet size and droplet generation rate with an outer feedback loop, using optical module for determining droplet size.

FIG 1

FIG 2

**CogniFlow-Drop**

Signal processing, communication, control

Light source

Light (illumination)

Intensity

Instructions

Pressure

Oil

Pressure

Pumping

Fluidic chip

Pump driver, pressure sensors

Pumps

Light (transmitted)

Water with reagents & sample

Photodetector

Power supply

Battery/mains

Network Communication Layer

Client-side device (WLAN based connection)

**Modules**
- Sensorics
- Electronics
- Fluidics
- Wireless Communication

Product collector

Downstream processes

FIG 3

FIG 4(a)

FIG 4(b)

FIG 5

FIG 7

**(a)** Driver LED Diffuser/ Lens PCB

**(b)** Fluid input Fluid output

PDMS Microfluidic chip Microscope slide

Metal plate Microfluidic channel

Pinhole

**(c)** Microscope lens

Transimpedance amplifier Lens holder

Photodiode

PCB

FIG 9

Ports configuration ● Water in ● Oil in ● Degas ● Outlet

Filter Junction width

Water inlet width Outlet width Oil inlet width

Filter

**(a)**

Outlet width Junction width Water inlet width Oil inlet width

**(b)**

FIG 10(a) FIG 10(b)

FIG 11

FIG 12

FIG 13

FIG 14

(a)

(b)

(c)

FIG 15

FIG 16

(a)

(b)

(c)

(d)

(e)

FIG 17

FIG 18

**Droplet aligned with pinhole**

FIG 19

FIG 20

FIG 21

FIG 22

FIG 23

FIG 24(a)

FIG 24(b)

FIG 24(c)

FIG 25(a)

FIG 25(b)

FIG 25(c)

FIG 26(a)                    FIG 26(b)

FIG 27

FIG 28(a)

FIG 28(b)

FIG 29

FIG 30

Europäisches
Patentamt

European
Patent Office

Office européen
des brevets

# EUROPEAN SEARCH REPORT

**Application Number**

EP 24 20 1803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOEMAA R ET AL: "Low-cost, portable dual-channel pressure pump for droplet microfluidics", 2022 45TH JUBILEE INTERNATIONAL CONVENTION ON INFORMATION, COMMUNICATION AND ELECTRONIC TECHNOLOGY (MIPRO), CROATIAN SOCIETY MIPRO, 23 May 2022 (2022-05-23), pages 205-211, XP034140397, DOI: 10.23919/MIPRO55190.2022.9803371 [retrieved on 2022-06-28] | 1,5-7 | INV. B01L3/00 G01N15/14 G01N15/1434 |
| Y | * the whole document * | 1-4,7 | |
| Y | GYIMAH NAFISAT ET AL: "PID Controller Tuning Optimization Using Genetic Algorithm for Droplet Size Control in Microfluidics", 2022 18TH BIENNIAL BALTIC ELECTRONICS CONFERENCE (BEC), IEEE, 4 October 2022 (2022-10-04), pages 1-6, XP034222163, DOI: 10.1109/BEC56180.2022.9935596 [retrieved on 2022-11-09] * the whole document * | 1,7 | |

-/--

| | |
|---|---|
| | TECHNICAL FIELDS SEARCHED (IPC) |
| | B01L G01N |

The present search report has been drawn up for all claims

| Place of search | Date of completion of the search | Examiner |
|---|---|---|
| The Hague | 10 February 2025 | Vlassis, Maria |

EPO FORM 1503 03.82 (P04C01)

Europäisches
Patentamt

European
Patent Office

Office européen
des brevets

# EUROPEAN SEARCH REPORT

Application Number

EP 24 20 1803

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DUAN XIUDONG ET AL: "Development of Robust On-Demand Droplet Generation System Using 3-D Image Reconstruction as Feedback", IEEE TRANSACTIONS ON INDUSTRIAL ELECTRONICS, IEEE SERVICE CENTER, PISCATAWAY, NJ, USA, vol. 70, no. 10, 21 November 2022 (2022-11-21), pages 10700-10709, XP011938905, ISSN: 0278-0046, DOI: 10.1109/TIE.2022.3222658 [retrieved on 2022-11-21] * the whole document * | 1,7 | |
| Y | US 2020/376488 A1 (WU GEORGE GUIKAI [US] ET AL) 3 December 2020 (2020-12-03) * the whole document * | 2-4 | |

TECHNICAL FIELDS
SEARCHED     (IPC)

The present search report has been drawn up for all claims

| Place of search | Date of completion of the search | Examiner |
|---|---|---|
| The Hague | 10 February 2025 | Vlassis, Maria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 1803

This annex lists the patent family members relating to the patent documents cited in the above-mentioned European search report.
The members are as contained in the European Patent Office EDP file on
The European Patent Office is in no way liable for these particulars which are merely given for the purpose of information.

10-02-2025

| Patent document cited in search report | Publication date | Patent family member(s) | | Publication date |
|---|---|---|---|---|
| US 2020376488 A1 | 03-12-2020 | CA | 3141069 A1 | 03-12-2020 |
| | | CN | 114207407 A | 18-03-2022 |
| | | EP | 3976813 A1 | 06-04-2022 |
| | | JP | 2022535036 A | 04-08-2022 |
| | | US | 2020376488 A1 | 03-12-2020 |
| | | US | 2021114035 A1 | 22-04-2021 |
| | | US | 2021402395 A1 | 30-12-2021 |
| | | WO | 2020243581 A1 | 03-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2411148 B1, B. Miller

**Non-patent literature cited in the description**

- **W. ZENG et al.** Precise monodisperse droplet generation by pressure-driven microfluidic flows. *Chem Eng Sci*, February 2022, vol. 248, 117206
- **X. DUAN** ; **Z. ZHENG** ; **Y. LUO** ; **C. SONG**. *Closed-loop feedback control for droplet-based microfluidics: a characteristic investigation on passive and on-demand droplet generation*, January 2023, 31
- **W. ZENG** ; **H. FU**. Precise monodisperse droplet production in a flow-focusing microdroplet generator. *Chemical Engineering Research and Design*, August 2020, vol. 160, 321-325
- **D. F. CRAWFORD** ; **C. A. SMITH** ; **G. WHYTE**. Image based closed-loop feedback for highly mono dispersed microdroplet production. *Sci Rep*, 2017, vol. 7 (1), 1-9

- **W. ZENG** ; **S. LI** ; **Z. WANG**. Closed-loop feedback control of droplet formation in a T-junction microdroplet generator. *Sens Actuators A Phys*, 2015, vol. 233, 542-547
- **Y. XIE** ; **A. J. DIXON** ; **J. M. R. RICKEL** ; **A. L. KLIBANOV** ; **J. A. HOSSACK**. Closed-loop feedback control of microbubble diameter from a flow-focusing microfluidic device. *Biomicrofluidics*, May 2020, vol. 14 (3), 034101
- **S. MOTAGHI** ; **M. NAZARI** ; **N. SEPEHRI** ; **A. MAHDAVI**. Control of droplet size in a two-phase microchannel using PID controller: A novel experimental study. *Amirkabir Journal of Mechanical Engineering Amirkabir J. Mech. Eng*, 2021, vol. 53 (7), 1013-1016
- **H. FU** ; **W. ZENG** ; **S. LI** ; **S. YUAN**. Electrical detection droplet microfluidic closed-loop control system for precise droplet production. *Sens Actuators A Phys*, 2017, vol. 267, 142-149